# EUROPÄISCHE PATENTSCHRIFT

(11) **EP 0 501 963 B1**
(45) Veröffentlichungstag und Bekanntmachung des Hinweises auf die Patenterteilung: **19.10.1994**
(21) Anmeldenummer: 90911423.3
(22) Anmeldetag: 19.07.1990
(51) Int. Cl.: G01P 3/489

(54) **VERFAHREN UND SYSTEM ZUR MESSDATENERFASSUNG UND -AUSWERTUNG**
PROCESS AND SYSTEM FOR ACQUIRING AND EVALUATING MEASUREMENT DATA
PROCEDE ET SYSTEME DE SAISIE ET D'EVALUATION DE DONNEES DE MESURE

(30) Priorität: 21.11.1989 DE 3938520
(43) Veröffentlichungstag der Anmeldung: 09.09.1992
(73) Patentinhaber: ITT Automotive Europe GmbH, 60488 Frankfurt (DE)
(72) Erfinder: KLEIN, Hans-Christoph, D-6231 Hattersheim (DE); LOHBERG, Peter, D-6382 Friedrichsdorf (DE); MÜNCH, Ludger, D-6238 Hofheim (DE)
(74) Vertreter: Haar, Lucas Heinz Jörn, Dipl.-Ing.
(86) Internationale Anmeldenummer: EP9001181
(87) Internationale Veröffentlichungsnummer: WO9107665

(56) Entgegenhaltungen:
- GB-A- 1 551 578
- GB-A- 2 081 909
- US-A- 4 224 672
- Design Engineering, vol. 1977, no. 8, August 1977, London, GB, Seite 27: "Transient processor and plotter combined in one unit"
- Elektronik, vol. 35, no. 4, February 1986, München, DE, pages 113-117, Vieten: "Erfassung schneller Messsignale mit dem Personal Computer"

## Beschreibung

Die Erfindung bezieht sich auf ein Verfahren zur mehrkanaligen Meßdatenerfassung und -auswertung, bei dem analoge Meßdaten in parallelen Meßdatenkanälen aufgenommen, in digitale Meßdaten gewandelt und in einen Speicher zur on-line- oder off-line-Auswertung abgelegt werden. Ein System mit voneinander unabhängigen, parallel betriebenen Meßdatenkanälen, nämlich mit Analogdatenkanälen, die über individuelle Analogdigitalwandler oder über Multiplexer mit jeweils einem gemeinsamen Analog-Digital-Wandler und über Speicher verfügen, mit digitalen Meßdatenkanälen bzw. sogen. Ereigniskanälen sowie mit Schaltkreisen zur Steuerung der Meßdatenerfassung sind ebenfalls Gegenstand der Erfindung.

Mehrkanalige Meßdatenerfassungs- und -auswertungssysteme sind bereits bekannt (Aufsatz von M. Vieten "Erfassung schneller Meßsignale mit dem Personal-Computer", Elektronik, Heft 4/1986). Solche Systeme werden u.a. in der Kraftfahrzeugtechnik sowohl für Fahruntersuchungen als auch zur Realisierung von digitalen Mehrgrößenreglern benötigt.

Die unter dem Begriff Transientenrekorder bekannten Meßwerterfassungssysteme setzen sich aus mehreren unabhängigen, parallel betriebenen Meßdatenkanälen zusammen. Im allgemeinen ist jedem Meßdatenkanal eine eigene Vorverstärkerstufe, ein eigener Analogdigitalwandler und ein eigener Datenspeicher zugeordnet. Jeder Kanal ist im Prinzip ein eigenes Gerät, mit der Besonderheit, daß alle Kanäle zeitlich synchron arbeiten und gemeinsam gesteuert werden. Zur Meßdatenerfassung wird an allen Kanälen in äquidistanten Zeitschritten gleichzeitig ein Augenblickswert des am Meßkanaleingang anliegenden Signals abgetastet, d.h. aufgenommen und verarbeitet. Nach der Analog-Digital-Wandlung werden die diesen Meßwerten entsprechenden Zahlenwerte in einem Speicher abgelegt. Je nach Anwendungsfall oder nach Ausführungsart des Systems verbleiben die Abtastwerte in dem Speicher bis zur "off-line"-Meßdatenauswertung, oder sie werden sofort "on-line" weiterverarbeitet, wobei sie nach einer gewissen Zykluszeit durch neue Daten überschrieben werden. Es existiert eine große Vielfalt von apparativen Abwandlungen dieses Prinzips. Z.B. kann man zur Kostenreduzierung, anstelle der Verwendung je eines Analog-Digital-Wandlers pro Kanal, die analogen Meßdaten über einen Multiplexer einem gemeinsamen Analog-Digital-Wandler zuführen. Da die Meßdaten nacheinander abgearbeitet werden müssen, verlängert sich durch diese Technik die Verarbeitungszeit.

Bei diesen bekannten, nach dem Transientenrekorder-Konzept arbeitenden Meßdatenerfassungssystemen wird einer Zahlenfolge bzw. Meßwertfolge stets auf der Basis einer Zeitfunktion gewonnen. Dies führt zu Einschränkungen, wenn es sich um technische Vorgänge handelt, bei denen der Zeitbezug keine oder nur eine untergeordnete Rolle spielt, und wenn der zur Erzeugung der Meßdaten verwendete Sensor inkremental arbeitet. Die durch die Messung erhältliche Information befindet sich dann nicht in der Signalamplitude, sondern ist im Flankenwechsel binärer Signalzustände enthalten. Beispielsweise markiert der Flankenwechsel des Signals am Ausgang eines ABS-Raddrehzahlsensors den Ablauf eines Rollwinkels und ist unabhängig davon, ob sich das Rad schnell oder langsam dreht. Eine zeitäquidistante Amplitudenabtastung ist in diesem Fall besonders ungünstig, weil zur ausreichend genauen Erfassung des Zeitpunktes des Flankenwechsels mit hoher Abtastrate gearbeitet werden muß, obwohl später nur jeweils ein Wert, nämlich der Zeitpunkt des Flankenwechsels, ausgewertet wird. In einem solchen Anwendungsfall werden daher häufig Zähler eingesetzt, die die Anzahl der auftretenden Flankenwechsel innerhalb eines Abtastintervalls registrieren. Diese Anzahl wird dann als Meßwert gespeichert. Dadurch lassen sich zwar Speicherplätze einsparen und die Auswertung vereinfachen, doch bleibt der Nachteil, daß die Phasenbeziehung zwischen unterschiedlichen Ereignissen nicht mehr zu rekonstruieren bzw. zur Gewinnung bestimmter Informationen auswertbar ist. Da die Messungen auf der gleichen Zeitbasis beruhen, ist die Auflösung des Meßinhalts und die erforderliche Meßzeit außerordentlich stark abhängig von der Radgeschwindigkeit.

Der Erfindung liegt daher die Aufgabe zugrunde, die vorgenannten Nachteile zu überwinden und ein Verfahren sowie ein System zur mehrkanaligen Meßdatenerfassung und -auswertung zu schaffen, das zur Erfassung analoger und digitaler Meßsignale, insbesondere auf dem Gebiet der inkrementalen Meßtechnik, geeignet ist und das sich im Vergleich zu Transientenrekordern durch eine hohe Meßpräzision, durch hohe Datenreduktion und eine dadurch bedingt hohe Speicherökonomie auszeichnet.

Es hat sich gezeigt, daß diese Aufgabe mit einem Verfahren der eingangs genannten Art gelöst werden kann, dessen Besonderheit darin besteht, daß die Meßdatenkanäle in Analogdatenkanäle und in digitale oder sogenannte Ereigniskanäle unterschieden oder getrennt werden, daß die analogen Daten mit Hilfe eines von den Ereignissen abgeleiteten, in den Ereigniskanälen verarbeiteten Signals synchron abgetastet werden, d.h. aufgenommen, verarbeitet (gewandelt) und gespeichert werden, daß die Phasenzeit zwischen zwei aufeinanderfolgenden Abtastsignalen gemessen wird und daß jeweils eine Kennung des die Abtastung auslösenden Ereignissignals bzw. des entsprechenden Ereigniskanals, die Phasenzeit zwischen diesem und dem vorherigen Abtastsignal, die zugehörigen Abtastwerte bzw. abgetasteten Meßdaten und die zeitliche Reihenfolge der Abtastvorgänge gespeichert werden.

Ein Meßdatenerfassungs- und Auswertungssystem zur Durchführung des Verfahrens besteht darin, daß die Aufnahme, Verarbeitung oder Weiterverarbeitung und Speicherung der in den einzelnen Analog-Daten-Kanälen anstehenden Meßwerte mit Hilfe eines von den Ereignissignalen abgeleiteten Abtastsignals synchron steuerbar ist, daß das Abtastsignal außerdem einem Kanaldecoder, der den Ereigniskanal des das Steuersignal auslösenden Ereignisses erkennt, sowie einem Phasenzeitmesser, der die Zeitdauer zwischen zwei aufeinanderfolgenden Abtastsignalen ermittelt, zuführbar ist und daß bei jedem Auftreten eines Abtastsignals die Kennung, z.B. die Nummer, des auslösenden Ereigniskanals, die Phasenzeit zwischen dem vorherigen und dem letzten Abtastsignal sowie die zugehörigen Abtastwerte und die zeitliche Reihenfolge der Abtastvorgänge speicherbar sind.

Ein wesentliches Merkmal der Erfindung ist also die Steuerung der Datenerfassung oder Abtastung in Abhängigkeit von "Ereignissen". Dadurch werden entscheidende Vorteile im Vergleich zum herkömmlichen Transientenrekorder-Prinzip erreicht. Aus den erfindungsgemäß in dem Speicher in der vorgesehenen Anordnung und Reihenfolge abgelegten Daten lassen sich durch entsprechende Verknüpfung und Auswertung vielfältige Informationen und Meßwerte mit hoher, bisher nicht erreichter Präzision ableiten, wie aus dem folgenden noch genauer hervorgeht. Gleichzeitig bleiben die Möglichkeiten des herkömmlichen Transientenrekorders erhalten. Mit Hilfe von äquidistanten Zeitsignalen an einem Eingang der Ereigniskanäle läßt sich nämlich eine "Transientenrekorderspur" einbringen; der Transientenrekorder ist folglich ein Sonderfall des erfindungsgmäßen Meßdatenerfassungs- und -auswertungssystems. Im Gegensatz zum Transientenrekorder kann jedoch nicht nur die Zeit als abtastende Größe, sondern auch - zusätzlich - jede andere Ereignisfolge benutzt werden. Es können z.B. die Fahrwegsinkremente eines ABS-Impulsrades oder die Signale eines Peiseler-Rades als Ereignissignale dienen. Erfindungsgemäß wird fortlaufend die Phasenzeit zwischen zwei aufeinanderfolgenden Impulsen, die hier die Ereignisse darstellen, gemessen. Unabhängig von der Fahrgeschwindigkeit wird die Berechnung der Augenblicksgeschwindigkeit stets auf ein gleiches Wegintervall bezogen. Da die Phasenzeit ohne großen Aufwand sehr genau gemessen werden kann, hängen Meßauflösung und Genauigkeit der Messungen nur noch von der Güte und Feinstufigkeit des Inkrementalgebers ab. Durch die Wahl eines Weginkrementes als Abtastintervall paßt sich die Abtastrate automatisch der Fahrgeschwindigkeit an. Dies ist von großem Vorteil, wenn sich die Messungen, wie bei Fahrversuchen, auf große Meßbereiche erstrecken sollen. Nach einem Ausführungsbeispiel der Erfindung wurde ein Fahrzeug-Meßdaten-Erfassungssystem aufgebaut, mit dem Augenblicksgeschwindigkeiten, bezogen auf 1/1000 Rollumfang, im Fahrgeschwindigkeitsbereich von 0,02 - 200 km/h auf 0,1% genau gemessen werden konnten. Diese Genauigkeit ist erforderlich, um die Güte von Meßwertgebern der 1%-Klasse zu nutzen. Mit der gleichen Genauigkeit lassen sich nach der Erfindung auch Fahrstrecken, Ortsphasen, Verdrehwinkel, Linearbewegungen oder Radschlupf-Relationen bestimmen und gleichzeitig können diesen Daten die Meßsignale analoger Kanäle zugeordnet werden. Durch die hohe Augenblickswertauflösung können selbst kleine Änderungen bzw. feine Details sichtbar gemacht und wahlweise als Funktion der Fahrzeit oder der Fahrstrecke dargestellt werden.

Nach einem vorteilhaften Ausführungsbeispiel der Erfindung weisen die Ereigniskanäle individuelle Signalaufbereitungsstufen auf, denen Ereignisraten-Untersetzer nachgeschaltet sind. Das Abtastsignal entsteht bevorzugt durch ODER-Verknüpfung aller aufbereiteten und ggf. untersetzten Ereignissignale.

Der Phasenzeitmesser enthält in einem Ausführungsbeispiel der Erfindung einen Zentralzähler, der durch jedes aufbereitete und ggf. untersetzte Ereignissignal zurückgesetzt und erneut gestartet wird, wobei jeweils der Zählerstand als Phasenzeit in den Speicher übertragen wird.

In einem weiteren Ausführungsbeispiel ist das erfindungsgemäße System mit gleichartigen Eingangsstufen ausgerüstet, die jeweils einen Eingangs- oder Vorverstärker und eine Umschalteinrichtung umfassen und deren Eingangssignale je nach Schaltstellung der Umschalteinrichtung als Anlogdaten und/oder als Ereignissignale auswertbar sind. Den Eingangsstufen sind vorteilhafterweise zusätzliche Signale, die die Richtung oder das Vorzeichen einer Signaländerung angeben, und Markiersignale zuführbar, z.B. zur Null-Markierung.

Weitere Merkmale, Vorteile und Anwendungsmöglichkeiten der Erfindung gehen aus der folgenden Beschreibung weiterer Details und aus den beigefügten Abbildungen hervor.

Es zeigen
- Fig. 1: in Blockdarstellung den prinzipiellen Aufbau eines Meßdatenerfassungs- und -auswertungssystems nach der Erfindung,
- Fig. 2: in gleicher Darstellungsweise ein weiteres Ausführungsbeispiel der Erfindung,
- Fig. 3: ein Schema der Meßdaten-Speicherung für die Systeme nach Fig. 1 oder 2,
- Fig. 4: in Form eines zeitkontinuierlichen Datenstranges ein Beispiel von mit dem erfindungsgemäßen System erfaßten Daten,
- Fig. 5: ein ähnliches Beispiel wie Fig. 4 mit zusätzlicher Darstellung der Abtastwerte eines Analogdatenkanals,
- Fig. 6-9: in gleicher Darstellungsweise wie Fig. 4 und 5 mit zusätzlichen Diagrammen (Fig. 6 - 8) einige Beispiele zur Erläuterung der Auswertbarkeit der gespeicherten Daten,
- Fig. 10: ein Diagramm zur Veranschaulichung der Auswertprozedur "Kanalfolge",
- Fig. 11: eine ähnliche Darstellung wie Fig. 10 mit Auswertung des Zentralzähler-Überlaufs und
- Fig. 12: ein Ausführungsbeispiel, bei dem zur Auswertung der Signale zusätzlich die Richtung und eine Markierung zu beachten sind.

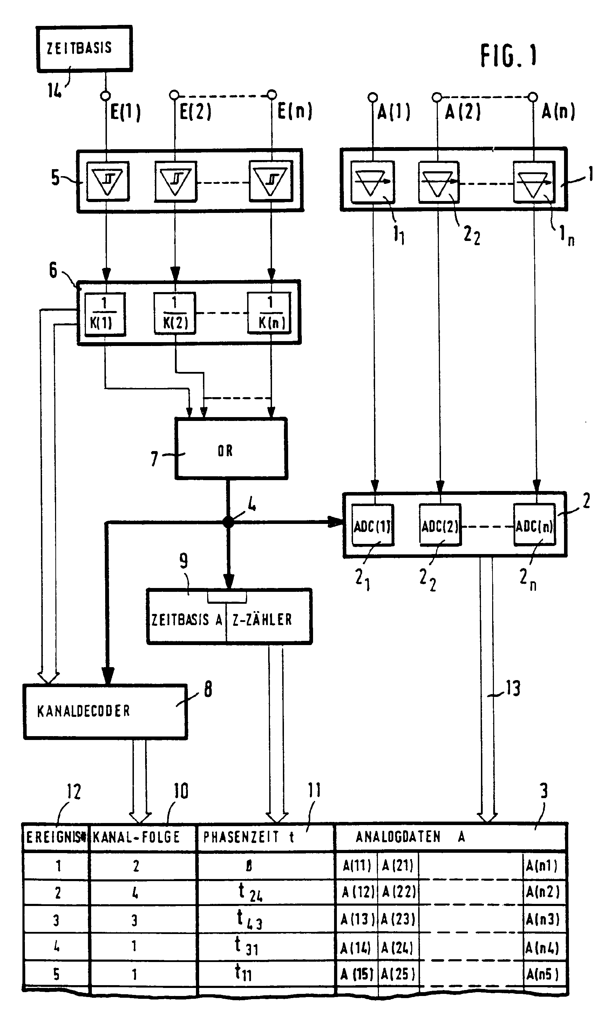

Nach Fig. 1 besteht in diesem Ausführungsbeispiel das Meßdatenerfassungssystem aus mehreren parallelen Analogdatenkanälen A(1),A(2),A(n), aus Ereigniskanälen E(1),E(2) - E(n), aus einem Steuerteil zur Erzeugung eines Abtastsignals 4 und aus einem Speicher mit dem Analogdatenbereich 3 sowie mit Speicherplätzen 10,11,12 für die Kanalfolge (10), für die Phasenzeiten (11) und für die Ereignisreihenfolge (12).

Die analogen Meßdaten werden über den einzelnen Kanälen zugeordneten Vorververstärker 1 (1₁,... 1ₙ) jeweils einem Analog-Digital-Wandler 2 (2₁,2₂,...2ₙ) zugeführt. Nach einem anderen nicht dargestellten Ausführungsbeispiel der Erfindung wird an die Ausgänge der Vorverstärker 1₁...1ₙ über einen Multiplexer ein gemeinsamer Analogdigitalwandler an Stelle der individuellen Analog-Digital-Wandler (2₁,2₂,...2ₙ) angeschlossen. Die mit Hilfe des oder der Analog-Digital-Wandler gewonnen Zahlen werden über eine Mehrfachleitung 13 in den Speicherbereich 3 übertragen.

An die Eingänge E(1) bis E(n) der Ereigniskanäle schließt sich ein Block mit den einzelnen Ereigniskanälen zugeordneten Signalaufbereitungsstufen 5 an. In einen Ereignisraten-Untersetzer 6 werden die Ereignissignale mit den Faktoren 1/K(1)...1/K(n) untersetzt, weil es in vielen Anwendungsfällen, insbesondere im Hinblick auf eine effektive Speicherausnutzung, vorteilhaft ist, nur das K-te Ereignissignal einer Ereignissignalfolge als wirksames Ereignis zur Auslöung der Meßdaten-Abtastung auszuwerten. Wenn z.B. ein inkrementaler Weggeber - angeschlossen an einen der Ereigniskanal-Eingänge E(n) - pro Millimeter Ortsverschiebung einen Impuls liefert und die Untersetzung auf K=10 eingestellt ist, dann beträgt die wirksame Ereignisrate 1 Zentimeter. Die wirksamen Ereignisse aller angeschlossenen Ereigniskanäle E(n) werden nach dem Passieren des Ereignisraten-Untersetzers 6 in einer logischen Stufe 7 ODER verknüpft und bilden dann gemeinsam das bereits erwähnte Abtastsignal oder Steuersignal 4. Im vorliegenden Fall ist an einen Eingang der Ereigniskanäle, nämlich an den Eingang E(1), eine Zeitbasis 14, z.B. das Ausgangssignal einer Uhr oder eines Taktgebers, angeschlossen. Dadurch wird in das zeitlich aperiodische Steuersignal 4 ein zeitperiodischer Anteil eingebettet, der innerhalb der aufgenommenen bzw. abgetasteten und im Speichersystem abgelegten Analogdaten eine sogenannte "Transientenrecorderspur" erzeugt.

Wesentliche Bestandteile des erfindungsgemäßen Systems sind ein Kanaldecoder 8 und ein Phasenzeitmesser 9, die beide parallel zu dem Analog-Digital-Wandler 2 an den Ausgang der ODER-Stufe 7 angeschlossen sind. Mit jedem Steuersignal oder Abtastsignal 4 wird also gleichzeitig der Wandler 2, der Kanaldecoder 8 und der Phasenzeitmesser 9 angesteuert. Der Kanaldecoder 8 bewirkt, daß zu jedem wirksamen Ereignissignal die Kennung bzw. die zugehörige Kanalnummer ermittelt und als Kanalfolge im Bereich 10 des Datenspeichers abgelegt wird. Der Phasenzeitmesser 9 mißt die Phasenzeit zwischen je zwei aufeinanderfolgenden Ereignissen und legt die entsprechende Information als Phasenzeit im Bereich 11 des Datenspeichers ab. Der Phasenzeitmesser 9 besteht aus einer Zeitbasis A und einem Zähler, hier Zentralzähler genannt. Mit jedem eintreffenden neuen Ereignissignal, gleich welcher Kanalherkunft, wird der Zentralzähler 9 zurückgestellt, erneut gestartet und der bis dahin angelaufene Zählerstand registriert. Multipliziert mit dem Intervall der Zeitbasis A ergibt sich die Phasenzeit, die dann im Bereich 11 des Datenspeichers abgelegt wird. Kanalfolge und Phasenzeiten werden vorteilhafterweise derart zugeordnet, daß die jeweils abgelaufene Phasenzeit in Verbindung mit derjenigen Kanalnummer registriert wird, die den Neustart des Zentralzählers ausgelöst hat. Es ergibt sich dann formal die in Fig. 1 dargestellte Vertikal- und Horizontalzuordnung der in dem Speicher abgelegten Daten.

Die den zeitlichen Abstand zwischen zwei Ereignissen darstellende Phasenzeit kann auf einfache Weise sehr genau bestimmt werden, weil hierzu lediglich ein schneller Zähler mit einer Zählbreite, die für den größten zeitlichen Abstand aufeinanderfolgender Ereignisse genügt, benötigt wird.

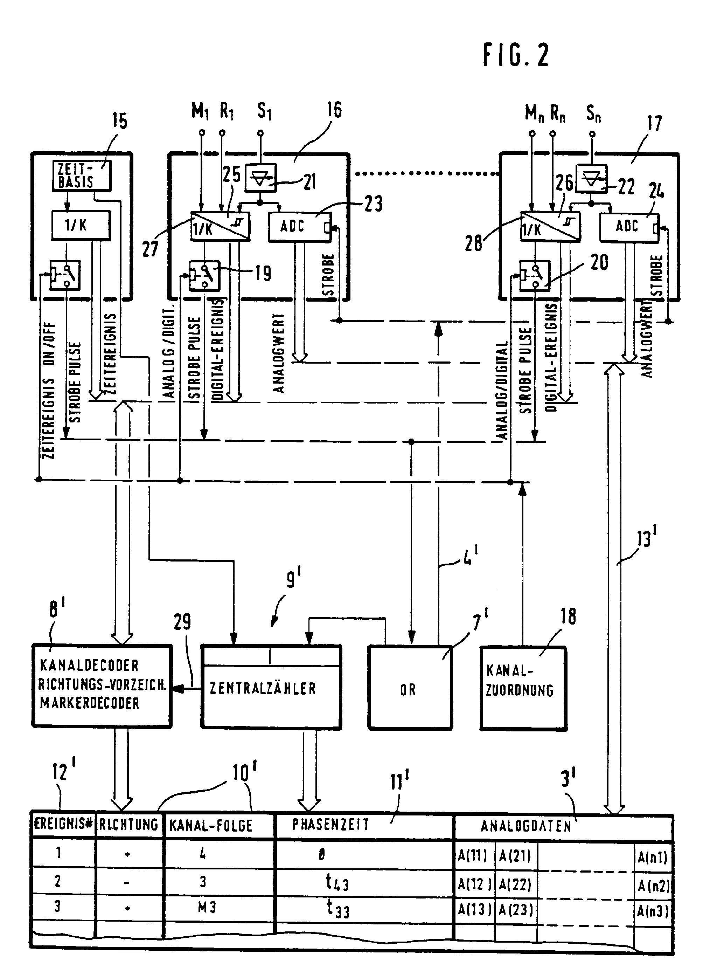

In der in Fig. 2 dargestellten Ausführungsvarianten der Erfindung sind neben einer einzelnen Zeitbasis 15, die ebenso wie die Zeitbasis 14 nach Fig. 1 zur Bildung einer "Transientenrecorderspur "dient, nur gleichartige Eingangsstufen 16,17 vorgesehen. Über eine Kanal-Auswahleinrichtung 18, die Umschalteinrichtungen 19,20 steuert, wird das an den Signaleingängen S₁, Sₙ der Eingangsstufen 16,17 anliegende Signal je nach Schaltstellung der Einrichtung 19,20 entweder als analoges Signal oder als digitales Signal bzw. (inkrementales) Ereignis ausgewertet. Die Eingangssignale S₁, Sₙ werden über Vorverstärkerstufen jeweils einem Analogdigitalwandler 23,24 und einer dem Wandler parallel geschalteten Signalaufbereitungsstufe 25,26, zu der jeweils auch ein Ereignisdaten-Untersetzer 27,28 gehört, zugeleitet. Zu den Analogdatenkanälen gehören folglich die Vorverstärker 21,22 sowie die Wandler 23,24, zu den Ereigniskanälen ebenfalls die Vorverstärker 21,22 die Signalaufbereitungsstufen 25,26 und die Ergnisdaten-Untersetzer 27,28. Die Vorverstärker 21,22 dienen zur Aufbereitung beider Signalarten - der Analogdaten und der Ereignissignale.

Von der Schaltstellung der Umschalteinrichtungen 19,20 hängt es ab, ob der inkrementale Anteil der Eingangssignale S₁, Sₙ gleichzeitig als Ereignissignal ausgewertet wird oder ob - bei offenem Schalter (19,20) - nur das Analogsignal verarbeitet wird.

Die einzelnen Eingangsstufen 16,17 besitzen zusätzliche Eingänge M₁, Mₙ; R₁, Rₙ, die zu den Signalaufbereitungsschaltungen 25,26 der Ereigniskanäle führen und mit denen zusätzlich die Richtung einer Signaländerung (R₁, Rₙ) und/oder eine Markierung, z.B. Null-Markierung (M₁, Mₙ), eingegeben werden kann.

Im übrigen stimmen die Ausführungsbeispiele nach Fig. 1 und Fig. 2 überein, was durch die entsprechenden Bezugsziffern 3′,4′,7′ bis 13′ zum Ausdruck kommt.

Die Zeitbasis 15 wirkt in der Ausführungsart nach Fig. 2 wie ein einschaltbarer integrierter Ereigniskanal und versorgt außerdem den Zentralzähler des Phasenzeitmessers 9′ mit Zählimpulsen. Der Kanaldecoder 8′ berücksichtigt zusätzlich zu den Kanalinformationen die Richtung bzw. das Richtungsvorzeichen sowie das Auftreten von Markiersignalen. Außerdem reagiert der Kanaldecoder 8′ noch auf Überlaufmarken des Zentralzählers, was durch den Pfeil 29 symbolisiert ist. In dem Speichersystem werden im Bereich 10′ zusätzlich zur Kanalfolge Richtungen und Markierungen berücksichtigt, worauf die eingetragenen Symbole +,-,M hinweisen.

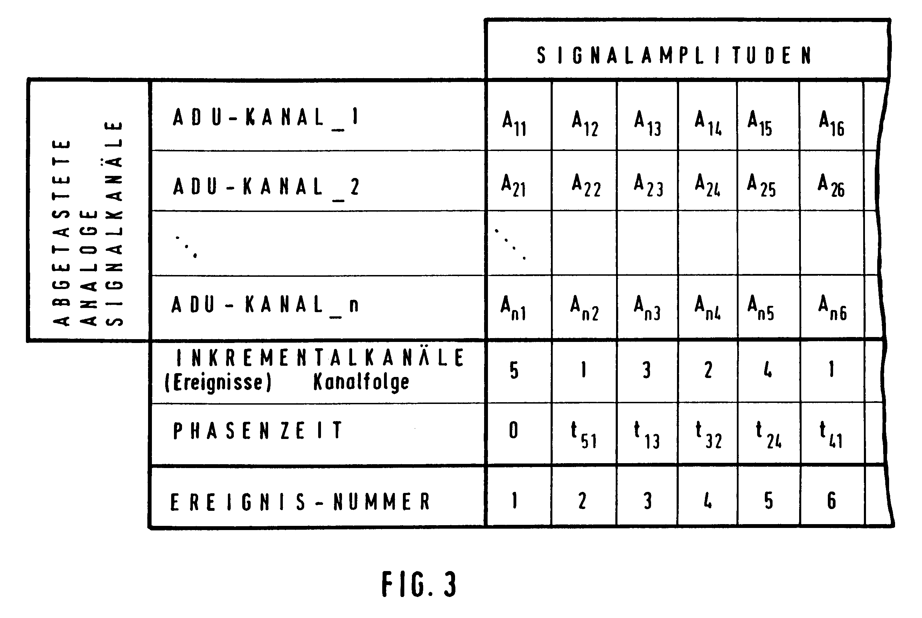

Fig. 3 zeigt in etwas abgewandelter Darstellungsweise nochmals das Schema, nach dem die Meßdaten abgespeichert werden, damit eine Zuordnung der Signalabtastwerte zu einem bestimmten Ereignis, einer bestimmten Ereignisfolge oder einem anderen bestimmten Zeitaugenblick im Rahmen der im folgenden noch näher erläuterten Signalausweitung möglich ist.

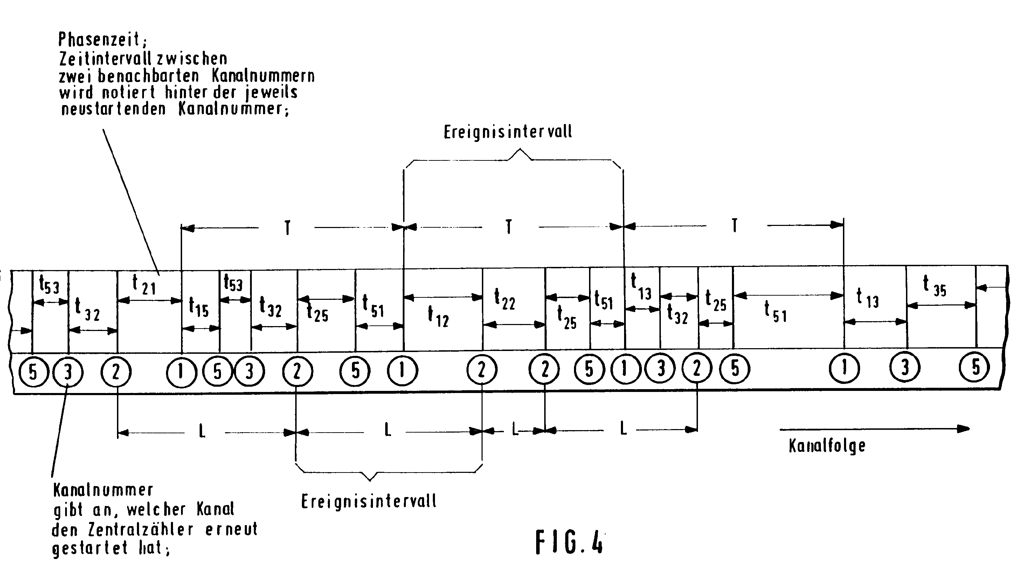

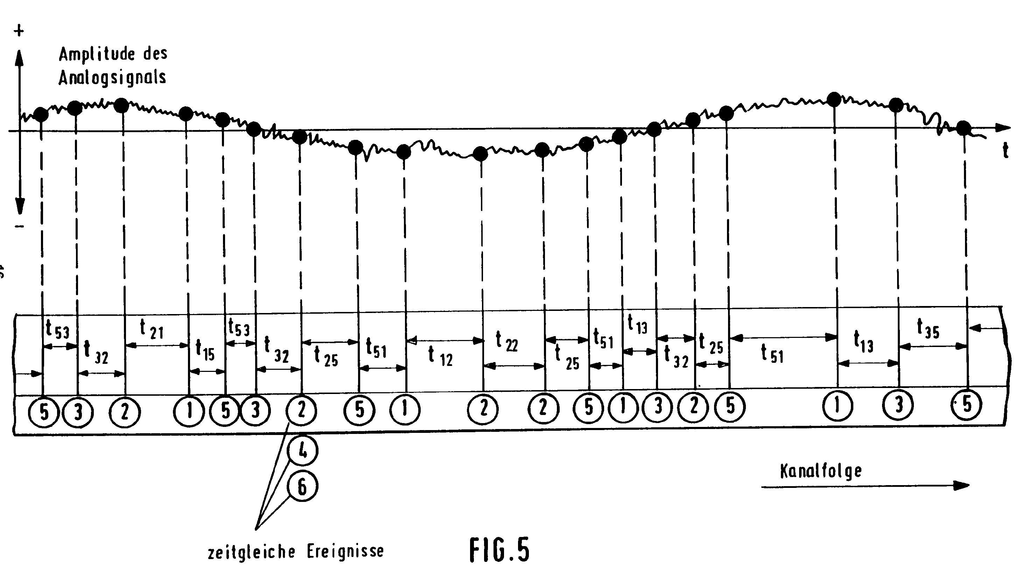

Die Figuren 4 und 5 veranschaulichen die Auswahl und die Reihenfolge der erfindungsgemäß ermittelten und abgespeicherten Daten. In Fig. 4 sind die abgespeicherten Daten, nämlich Kanalkennungen bzw. Kanalnummern und Phasenzeiten, in Form eines zeitkontinuierlichen Datenstranges dargestellt. Fig. 5 zeigt zusätzlich noch die mit Hilfe eines analogen Meßdatenkanals gewonnenen, in Abhängigkeit von den "Ereignissen" abgetasteten und abgespeicherten Meßwerte.

Nach Fig. 4 und 5 liegt stets zwischen zwei gleichen Kanalnummern ein gleiches Ereignisintervall. Zum Beispiel könnten die Ereignisintervalle von Kanal 2 je einem Weginkrement L=konstant entsprechen, während die im Kanal 1 übertragenen Ereignisse von einer Zeitbasis (Zeitbasis 14 oder 15 nach Fig. 1 oder Fig. 2) stammen, da T=konstant gilt. Die Figuren 4 und 5 veranschaulichen, daß der herkömmliche Betrieb mit konstanter zeitlicher Abtastrate nur ein Sonderfall des Verfahrens und des Systems nach der Erfindung darstellt. Besonders wichtig ist, daß die exakten Phasenbeziehungen aller Ereignisse zur Auswertung der Meßsignale rekonstruiert werden können.

Fig. 5 zeigt die Abtastung der Meßwerte bzw. Signalamplituden eines Analogdatenkanals durch die in unregelmäßiger Folge eintreffenden Ereignissignale. Der Übersichtlichkeit wegen ist hier nur ein Analogdatenkanal dargestellt; in aller Regel sind mehrere Analogdatenkanäle vorhanden, die parallel und synchron abgetastet werden, wie dies anhand der Figuren 1 und 2 beschrieben wurde. Fallen mehrere Ereignisse in eine Zeitspanne, die durch ein einziges der vorgebenen Zentralzählerinkremente bestimmt ist, werden diese Ereignisse als zeitgleich behandelt. Es wird das mehrfache Auftreten von Ereignissen ohne gegenseitige Phasenzeit registriert. Ein Beispiel eines solchen Falles ist für die Ereigniskanäle 2/4/6 in Fig. 5 eingezeichnet. Die bekannten Gesetze von "Shannon", die die Mindestanforderungen an die Abtastrate beschreiben, sind auch im vorliegenden Fall bei der Festlegung der Zentralzählerrate einzuhalten.

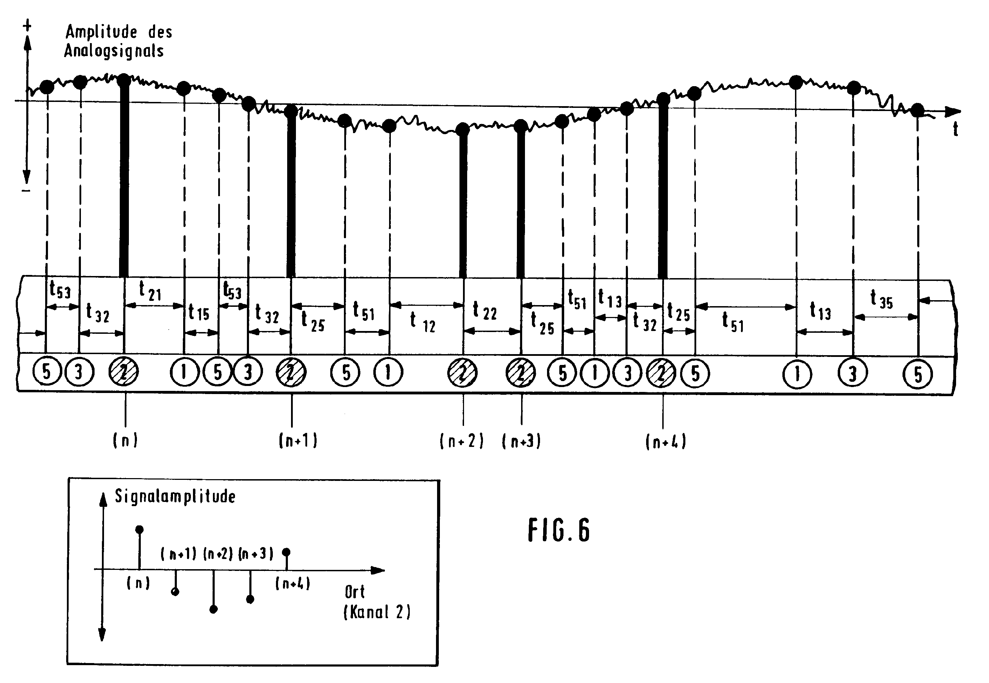

Fig. 6 veranschaulicht die Struktur einer Analogkanal-Auswertung nach Ereignissen von Kanal 2. Als Beispiel sei hier angenommen, daß diese Ereignisse von dem Impulsrad eines Raddrehzahl-Sensors, wie er z.B. in Kraftfahrzeugen zur Blockierschutzregelung verwendet wird, abgeleitet sind. Bezogen auf den Radumfang, würde es sich also um Weginkremente handeln. Zur Darstellung eines Analogvorgangs über dem Fahrweg (Ort) wird nun die Kanalfolge nach dem Auftauchen der Kanalnummer 2 abgesucht und der zu diesem Ereignis abgetastete und abgespeicherte Analog-Wert zugeordnet. Im vorliegenden Fall wird derjenige Ereigniskanal, auf den sich der Suchvorgang bezieht (dies ist Kanalnummer 2) als "Referenzkanal" bezeichnet. Diesem Kanal ist zugleich graphisch die X-Achse zugeordnet (Diagramm links unten in Fig. 6). Der auf den Referenzkanal bezogene andere Kanal (Analog- oder Ereigniskanal) wird als "Bezugskanal" bezeichnet. Diesem ist graphisch die Y-Achse zugeordnet. Auswertevorgänge, bei denen den Referenzkanalereignissen abgetastete Analogwerte zugeordnet sind, werden hier mit dem Begriff Funktion FKT bezeichnet.

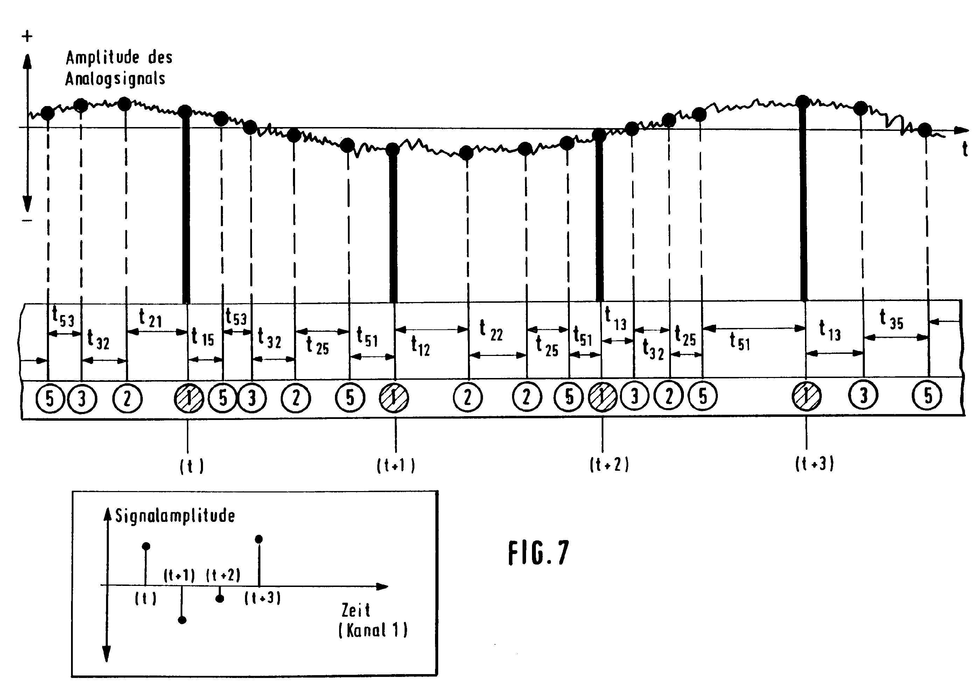

Fig. 7 zeigt, auf welcher Weise mit Hilfe des erfindungsgemäßen Verfahrens (zusätzlich zu den anderen Auswertungsmöglichkeiten) die Wirkungsweise eines herkömmlichen Transientenrekorders erreicht wird. Zu diesem Zweck werden bei der Aufnahme die Signale einer Zeitbasis (Zeitbasis 14 in Fig. 1) auf einen Ereigniskanal geleitet. Bei der anschließenden Prozedur FKT wird dieser Kanal als Referenzkanal ausgewählt. In Fig. 7 ist dies Kanal 1. Das Zeitereignis ist an der gleichbleibenden Summe der Phasenzeiten zwischen den Referenzkanalnummern zu erkennen.

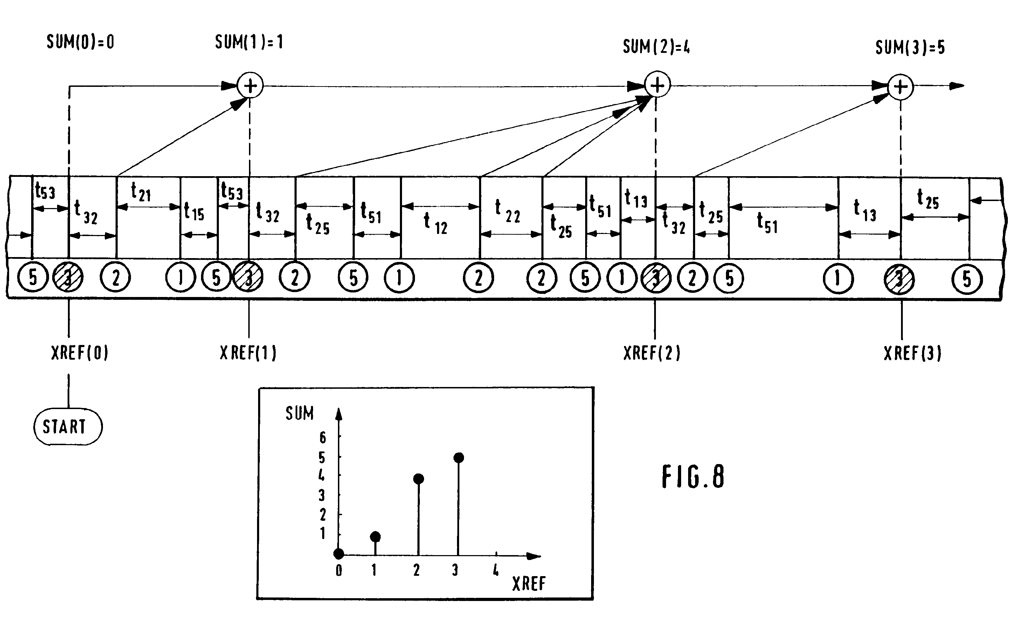

Es gibt zahlreiche weitere Möglichkeiten zur Auswertung der nach dem, erfindungsgemäßen Verfahren ermittelten und abgespeicherten Werte. Nach einer anhand der Fig. 8 erläuterten Auswerteprozedur, die mit SUM/XREF bezeichnet wird, werden zwei Ereignisfolgen zueinander in Bezug gesetzt. Im dargestellten Beispiel ist Kanal 3 der Referenzkanal und Kanal 2 der Bezugskanal. Pro Referenzkanal-Intervall wird abgezählt, wie oft eine Bezugskanalnummer erscheint, und es wird diese Zahl zum vorherigen Wert saldiert. Ausgehend von einem Startpunkt ergibt sich so die Zunahme der Bezugsereignisse über den Inkrementen des Referenzkanals. Sind z.B. die Referenzkanalereignisse Abbilder eines Raddrehzahlsensor-Polrades, das an dem linken vorderen Rad eines Kraftfahrzeuges angeordnet ist, und die Bezugskanalereignisse diejenigen eines gleichen Polrades vorn rechts, so könnte auf diese Weise der Wegunterschied der beiden Räder einer Achse bei der Kurvenfahrt des Fahrzeugs unmittelbar dargestellt werden.

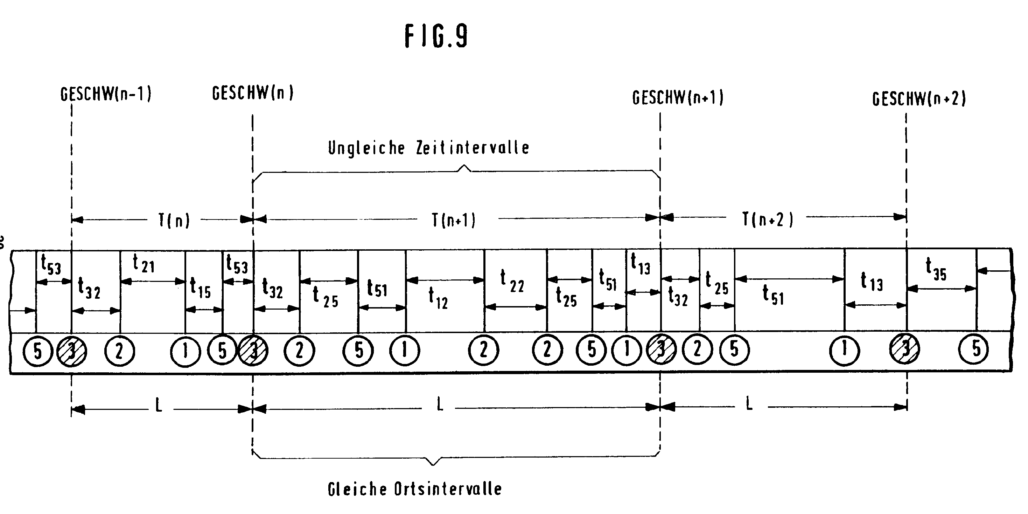

Fig. 9 bezieht sich auf eine Auswerteprozedur, die hier mit GESCHW bezeichnet wird. Sie dient zur Berechnung und Darstellung der Augenblickswerte der Ereignisgeschwindigkeit. Dazu wird das Ereignisintervall des betrachteten Kanals (im vorliegenden Beispiel Kanal 3) durch die Summe der zugehörigen Phasenzeiten dividiert. Dieser Vorgang entspricht der Bildung eines zeitlichen Differenzenquotienten mit gleichen Zählerdifferenzen, aber ungleichen Nennerdifferenzen. Mit dieser Prozedur und dem erfindungsgemäßen Verfahren der Kanalfolge- und Phasenzeitbestimmung hat der Benutzer ein einfaches Hilfsmittel zur Verfügung, um auch mit Pulsgebern gröberer Teilung (z.B. Pulsrädern von herkömmlichen ABS-Raddrehzahlsensoren) genaue Augenblicksgeschwindigkeitswerte bestimmen zu können, und zwar ohne den nach bekannten Verfahren hierfür erforderlichen Aufwand an Speicherplätzen und Meßzeit.

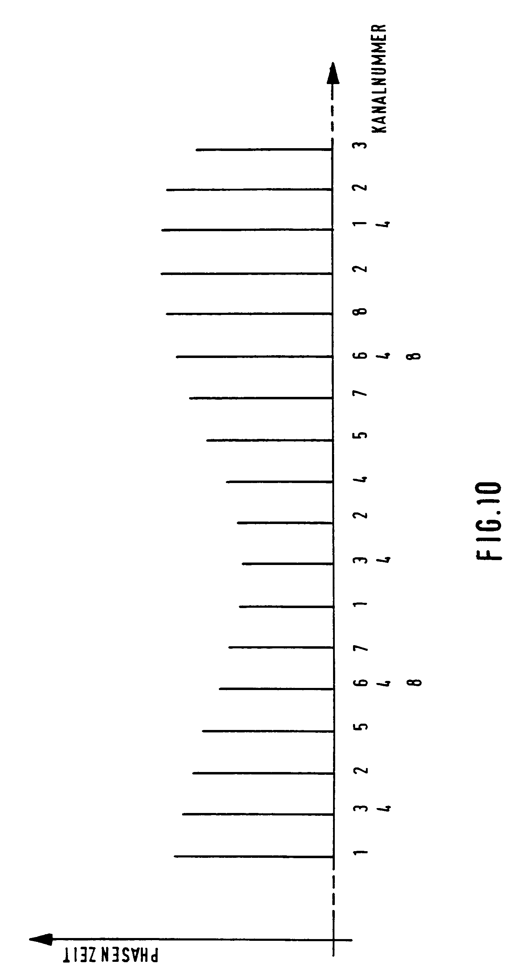

Eine anhand der Fig. 10 erläuterte Auswerteprozedur, die KANALFOLGE genannt wird, macht die Reihenfolge der einlaufenden Ereignisse sichtbar. Dazu wird die jeweils abgelaufene Phasenzeit über derjenigen Kanalnummer aufgetragen, die den Zentralzähler erneut gestartet hat. Ereignisse an unterschiedlichen Kanälen, die innerhalb der physikalisch bedingten Auflösezeit zugleich auftreten, werden als parallel auftretende Ereignisse mit mehreren Kanalnummern vermerkt. Die KANALFOLGE ist gut geeignet, um meßtechnische Fehler zu analysieren (z.B. einen Zentralzähler-Überlauf) und rhythmische Ereignisbewegungen (z.B. Frequenzmodulationen) sichtbar zu machen.

Die Vielseitigkeit des erfindungsgemäßen Verfahrens läßt sich an einem weiteren einfachen Beispiel erläutern. Es soll der Verlauf der Fahrzeuggeschwindigkeit bei einem Bremsvorgang zum einen als Funktion des Bremsweges, zum anderen als Funktion der Fahrzeit ermittelt werden. Als Weggeber dient das Impulsrad eines ABS-Raddrehzahlsensors, dessen Signale an einen Ereigniskanal, z.B. an Kanal 5, gelegt werden. Zusätzlich werden die Signale einer Zeitbasis genügend hohe Abtastrate an einen anderen Ereigniskanal, z.B. Kanal 4, angeschlossen. Die Auswerteprozedur GESCHW liefert dann direkt die Darstellung der Fahrzeugggeschwindigkeit als Funktion des Bremsweges. Wählt man Kanal 5 als Referenzkanal und Kanal 4 als Bezugskanal, so liefert in einem Zwischenschritt die Prozedur SUM/XREF (siehe Fig. 8) die Zeit als Funktion des Bremsweges. In einer anschließenden Prozedur XY (X = SUM/XREF; Y = GESCHW) dient der Bremsweg als Verknüpfungsgröße, und es ergibt sich die zweite gewünschte Darstellung, nämlich die Geschwindigkeit als Funktion der Fahrzeit.

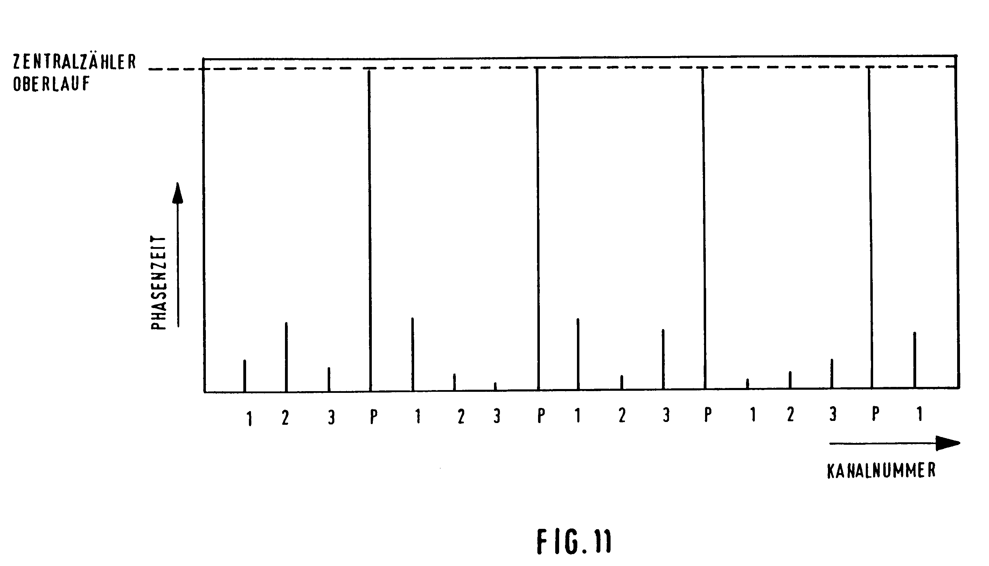

Weiterhin ist es möglich, mit dem Überlauf des Zentralzählers eine Überlaufmarke in die Kanalfolge zu schreiben und den Zentralzähler danach sofort wieder zu starten, siehe Fig. 2. Das Überlaufergebnis kann nun wie ein gewöhnliches Ereignissignal ausgewertet werden. Dies hat den Vorteil, daß der Zentralzähler stets mit höchster Geschwindigkeit (höchster Auflösung) arbeiten kann, ohne daß zu befürchten ist, daß ein Zentralzählerüberlauf die Messung unbrauchbar machen könnte. Es ist technisch möglich, den Zentralzähler mit einer Frequenz zu betreiben, die einem ganzzahligen Vielfachen der physikalisch bedingten Zeit entspricht, die benötigt wird, um die Überlaufmarke zu setzen. Bei der Auswertung dieser Marke kann dann das den Setzfehler entsprechende Inkrement wieder addiert werden und so der schon sehr geringe Zeitfehler praktisch vollständig kompensiert werden. Fig. 11 veranschaulicht eine Kanalfolge mit Überlaufmarken P.

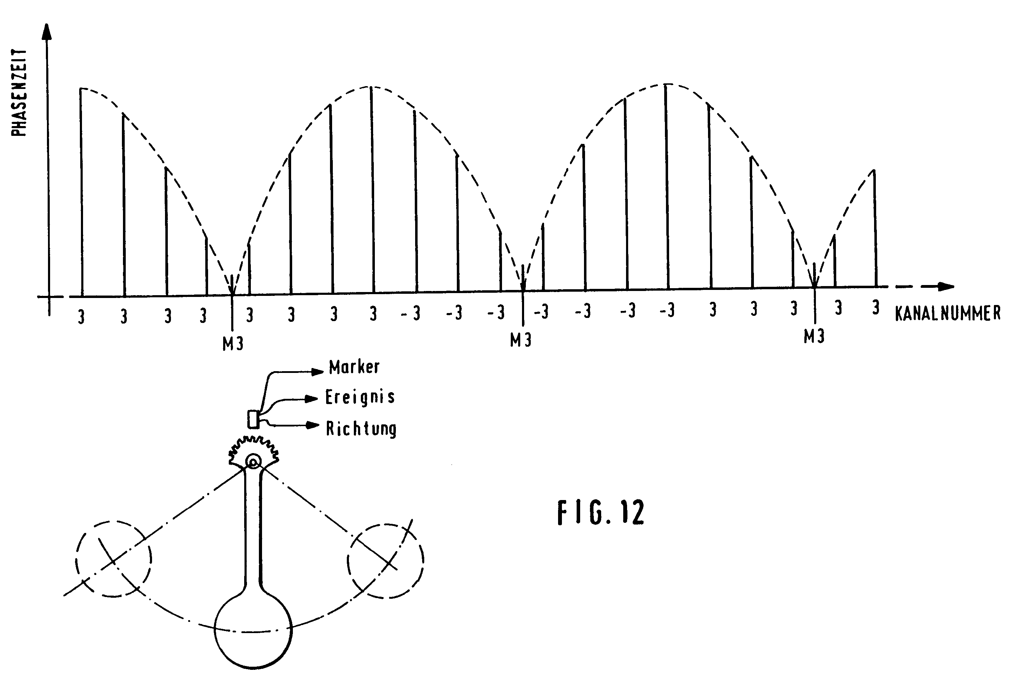

Wie bereits anhand der Fig. 2 erläutert wurde, kann auch die "Richtung" der Ereignisse berücksichtigt werden. In vielen technischen Fällen, z.B. bei Kraftfahrzeug-Fahrversuchen, spielt die Fahrtrichtung, vorwärts oder rückwärts, eine Rolle. Bei anderen technischen Vorgängen kann die Richtung gegenüber einem Bezugszustand wechseln. Zu Meßzwecken erhältliche Inkrementalgeber sind auf diese Anforderung vorbereitet und liefern neben dem Ereignissignal auch Kennsignale für die Richtung und zur Markierung von Bezugspunkten, z.B. des Nullpunktes. In manchen Fällen werden statt eines Richtungssignals auch zwei um 90° verschobene Ereignissignale geliefert, aus denen dann die Laufrichtung bestimmt werden kann. Bei der Ausführungsart der Erfindung nach Fig. 2 wird dies nun einfach dadurch berücksichtigt, daß die Ereignisrichtung als Kanal-Vorzeichen in die Kanalfolge übernommen wird und daß zusätzlich ein Markiereingang als zusätzlicher, besonders gekennzeichneter Kanal vorgesehen wird. In Fig. 12 ist als Beispiel eine Kanalfolge dargestellt, die aus einer Pendelbewegung mit Hilfe eines geeigneten Inkrementalgebers gewonnen wird, der auf Kanal 3 arbeitet. Die Phasenzeiten werden als Betragsgrößen abgebildet. Die Umkehrung der als positiv gewählten Pendelrichtung wird durch das negative Vorzeichen der Kanalnummer kenntlich gemacht. Der Marker ist mit M3 als zusätzlicher Kanal eingetragen. Die zuvor beschriebenen grundsätzlichen Auswerteprozeduren ändern sich nur dahingehend, daß beim Rechenvorgang ein Vorzeichen berücksichtigt werden muß bzw. daß zusätzlich relative Umrechnungen zur Position des Markers vorgenommen werden müssen. Natürlich kann ein Marker auch Referenzkanal für andere Bezugskanäle sein. Dem Fachmann ist es ohne weiteres möglich, das erfindungsgemäße Verfahren dem jeweiligen Anwendungsfall anzupassen.

Im folgenden wird ein konkretes Ausführungsbeispiel des bereits anhand der Fig. 1 beschriebenen Meßdatenerfassungs- und -Auswertungssystems beschrieben.

Das System verfügte in diesem Fall über 12 Analogkanäle, von denen jeder mit einem eigenen Analog-Digital-Wandler von 12 bit Auflösung ausgerüstet war. Es waren 8 Ereigniskanäle und eine Zeitbasis (14), die in Verbindung mit einem der Ereigniskanäle zur Einkopplung von Zeitereignissen in die Kanalfolge diente, vorhanden. Die Zeitbasis arbeitete im Bereich von 2 Hz bis 200 kHz. Die Ereignisraten-Untersetzer (6) waren von 1 bis 256 verstellbar. Zur Messung der Phasenzeiten war ein 12 bit breiter Zentralzähler mit einer eigenen Zeitbasis von 2 Hz bis 200 kHz vorgesehen. Jedem Analogkanal sowie dem Kanalfolge-Speicherbereich (10) war ein eigener RAM-Speicher von 128 kB Meßdatenkapazität zugeordnet, so daß insgesamt 128.000 Ereignisse erfaßt werden konnten. Die Meßdatenerfassung konnte wahlweise durch das Auftreten eines Ereignissignals oder durch ein von Hand eingebbares Signal gestartet und von Hand zu beliebigem Zeitpunkt abgebrochen werden. Erreichte die Summe der einlaufenden Signalereignisse eine als Block vorgegebene Zahl von Datenspeicherplätzen, so wurde die Messung selbsttätig unterbrochen.

Meßdatenerfassung, -speicherung, -auswertung und -darstellung erfolgten Computer-unterstützt. Zur Auswertung der Kanalfolge diente dabei eine Software, die alle oben beschrieben Prozeduren beinhaltete.

Die Vielfalt der Anwendungsmöglichkeiten eines solchen Systems soll am Beispiel eines Versuchsfahrzeugs beschrieben werden, das mit (Radgeschwindigkeit) Sensoren und mit dem erfindungsgemäßen Meßdatenerfassungssystem ausgerüstet war. Über die Analogkanäle wurden Bremsdrücke, Einfederwege usw. gemessen. An die Ereigniskanäle waren Radgeschwindigkeits-Impulsgeber angeschlossen (Peiseler-Räder), die pro Umdrehung 1000 Impulse erzeugten und dadurch den Rollweg auf ca. 1,6 mm auflösen konnten. Einige der möglichen Meßkonfigurationen sind im folgenden aufgezählt:
- Messungen über dem Fahrweg (Ort):
   - Belegung: 1 Ereigniskanal mit einem Radimpulsgeber bei einer Ereignisraten-Untersetzung von K=250; alle 12 Analogkanäle;
      Möglichkeiten: Messungen entlang einer Wegstrecke von ca. 50 km, wobei die Fahrgeschwindigkeit beliebig (zeitweise auch Null) sein kann und wobei ca. alle 40 cm eine Abtastung der Analogdatenkanäle erfolgt.
   - Belegung: 5 Ereigniskanäle, nämlich vier Radimpulsgeber bei einer Ereignisraten-Untersetzung von K=1; 1 Fahrgeschwindigkeitsgeber;
      Möglichkeiten: Vermessen von Fahrtstrecke und Radrollwegen auf 1,6 mm genau; gleichzeitig Ermittlung der Augenblickswerte von Fahrzeug- und Radgeschwindigkeiten bzw. Radschlupfmessungen mit gleicher Auflösung;
- Messungen über der Zeit:
   - Bei Ereignissen mit im Mittel konstanter Ereignisgeschwindigkeit kann durch Einstellung der Zentralzählergeschwindigkeit die maximale zeitliche Auflösung 0,025% der Ereignisperiode betragen. Dies gilt für Periodendauern von 10 ms bis zu 2000 Sekunden.
   - Belegung: 1 Ereigniskanal mit der internen Zeitbasis (14 in Fig. 1); alle 12 Analogkanäle Möglichkeiten: Es entsteht ein 12-kanaliger Transientenrekorder mit 128 kB Meßdatenkapazität pro Kanal, der mit 200 kHz Abtastfrequenz zu betreiben ist.

Nach einer Ausbildungsvarianten der beschriebenen Ausführungsform wurden vier Analogkanal-Eingangsstufen über einen Multiplexer jeweils einem gemeinsamen Analog-Digital-Wandler zugeführt. Es wurde ein Wechselpuffer verwendet, um einen kontinuierlichen Meßdatenfluß zu einem Massenspeicher zu erzeugen. Hierbei verfügte das Meßdatenerfassungssystem über zwei gleichartig organisierte kleinere RAM-Speicher (Puffer). Während der erste Puffer Meßdaten aufnahm, übertrug der zweite die Daten auf den Massenspeicher, und umgekehrt. Auf diese Weise war es möglich, neben den abgetasteten Analogwerten die Daten über die Kanalfolge, Phasenzeiten usw. kontinuierlich auf einen Massenspeicher großer Kapazitäten zu übertragen.

Der Grundgedanke des beschriebenen, erfindungsgemäßen Verfahrens und das Prinzip des entsprechenden Meßdatenerfassungs- und -auswertungssystems bestehen also darin, daß die "Ereignisse" aller an den Ereigniseingängen angeschlossenen inkrementalen Sensoren und ggf. die Impulse einer zusätzlichen internen Zeitbasis in der zeitlichen Reihenfolge ihres Auftretens, ggf. untersetzt, einen Abtastvorgang auslösen. Dadurch werden nach Art einer Blitzlichtaufnahme alle analogen Signalkanäle synchron abgetastet. Da die Ereignisse zeitlich nicht synchronisiert sind, erfolgt die Abtastung in der Regel nichtäquidistant. Ist außerdem eine Zeitbasis, deren Zeitsignale äquidistant sind, angeschlossen, wird dem Meßvorgang gewissermaßen eine Transientenrekorderspur überlagert. In Verbindung mit der Abtastung der an den Analogdatenkanälen anstehenden Meßdaten wird zugleich registriert, in welcher Kanalfolge die Abtastungen ausgelöst wurden und welches Zeitintervall (Phasenzeit) zwischen je zwei abtastenden Ereignissen abgelaufen ist. Die Meßdaten werden dann nach einem Schema, das in Fig. 3 in besonders übersichtlicher Art dargestellt ist, gespeichert, so daß die nachträgliche Zuordnung der Signalabtastwerte zu einem bestimmten Ereignis, einer bestimmten Ereignisfolge oder einem bestimmten Zeitpunkt möglich wird.

## Patentansprüche

1. Verfahren zur mehrkanaligen Meßdatenerfassung und -auswertung, bei dem analoge Meßdaten in parallelen Meßdatenkanälen aufgenommen, in digitale Meßdaten gewandelt und in einen Speicher zur on-line- oder off-line-Auswertung abgelegt werden, wobei die analogen Meßdaten in den paralellen Meßdatenkanälen durch eine digitale Signalfolge oder Ereignisfolge synchron abgetastet werden, dadurch **gekennzeichnet**, daß die Meßdatenkanäle in Analogdatenkanäle und in digitale oder sogenannte Ereigniskanäle unterschieden oder getrennt werden, daß die synchrone Abtastung, d.h. Aufnahme, Verarbeitung und Ablage der in den analogen Meßdatenkanälen erfaßten Meßdaten mit Hilfe des von den Ereignissen abgeleiteten, in den Ereigniskanälen verarbeiteten Signals (4,4′) gesteuert wird, daß die Phasenzeit (tₙₘ) zwischen zwei aufeinanderfolgenden Abtastsignalen gemessen wird und daß jeweils eine Kennung des die Abtastung auslösenden Ereignissignals, d.h. des entsprechenden Ereigniskanals, die Phasenzeit (tₙₘ) zwischen diesem und dem vorherigen Abtastsignal und die zugehörigen Abtastwerte oder abgetasteten Meßdaten (A(nm)) gespeichert werden.

2. Verfahren nach Anspruch 1, dadurch **gekennzeichnet**, daß das Abtastsignal (4,4′) durch ODER-Verknüpfung von Ereignissignalen und/oder untersetzter Ereignissignale gebildet wird.

3. System zur Durchführung der Meßdatenerfassung und -auswertung nach Anspruch 1 oder 2, mit voneinander unabhängigen, parallel betriebenen Meßdatenkanälen, nämlich mit Analogdatenkanälen, die über individuelle Analog-Digital-Wandler oder über Multiplexer mit jeweils einem gemeinsamen Analog-Digital-Wandler und über Speicher verfügen, mit digitalen Meßdatenkanälen oder sogenannten Ereigniskanälen sowie mit Schaltkreisen zur Steuerung der Abtastung und Meßwerterfassung, dadurch **gekennzeichnet**, daß die Aufnahme, Verarbeitung oder Weiterverarbeitung und Speicherung der in den einzelnen Analogdatenkanälen anstehenden Meßwerte mit Hilfe eines von den Ereignissignalen abgeleiteten Abtastsignals (4,4′) synchron steuerbar ist, daß das Abtastsignal außerdem einem Kanaldecoder (8,8′), der den Ereigniskanal des das Abtastsignal auslösenden Ereignisses erkennt, sowie einem Phasenzeitmesser (9,9′), der die Zeitdauer (tₙₘ) zwischen zwei aufeinanderfolgenden Abtastsignalen (4,4′) ermittelt, zuführbar ist und daß bei jedem Auftreten eines Abtastsignals (4,4′) die Kennung, z.B. die Nummer, des auslösenden Ereigniskanals und die Phasenzeit (tₙₘ) zwischen diesem und dem vorherigen Abtastsignal sowie die zugehörigen Abtastwerte speicherbar sind.

4. System nach Anspruch 3, dadurch **gekennzeichnet**, daß ein Ereigniskanal vorhanden ist, an den eine Zeitbasis (14,15) angeschlossen ist.

5. System nach Anspruch 3 oder 4, dadurch **gekennzeichnet**, daß die Ereigniskanäle individuelle Signalaufbereitungsstufen (5,25,26) aufweisen, denen Ereignisraten-Untersetzer (6,27,28) nachgeschaltet sind.

6. System nach einem oder mehreren der Ansprüche 3 - 5, da-durch **gekennzeichnet**, daß das Abtastsignal durch ODER-Verknüpfung (ODER-Stufe 7,7′) aller aufbereiteten oder ggf. untersetzten Ereignissignale entsteht.

7. System nach einem oder mehreren der Ansprüche 3 - 6, dadurch **gekennzeichnet**, daß der Phasenzeitmesser (9,9′) einen Zentralzähler enthält, der durch jedes aufbereitete und ggf. untersetzte Ereignissignal zurückgesetzt und erneut gestartet wird, wobei jeweils der Zählerstand als Phasenzeit in den Speicher (11,11′) übertragbar ist.

8. System nach einem oder mehreren der Ansprüche 3 - 7, dadurch **gekennzeichnet**, daß dieses mit gleichartigen Eingangsstufen (16,17) ausgerüstet ist, die jeweils einen Eingangs- oder Vorverstärker (21,22) und eine Umschalteinrichtung (19,20) umfassen und deren Eingangssignale je nach Schaltstellung der Umschalteinrichtung (19,20) als Analogdaten und/oder als Ereignissignale auswertbar sind.

9. System nach Anspruch 8, dadurch **gekennzeichnet**, daß den Eingangsstufen (16,17) zusätzliche Signale (Eingänge R1,R2), die die Richtung oder das Vorzeichen einer Änderung angeben, und Markiersignale (Eingänge M₁,M₂), z.B. zur Null-Markierung, zuführbar und in diesen auswertbar sind.

## Claims

1. A process for multi-channel gathering and evaluation of measured data where analog measured data are picked up in parallel measured data channels, are converted into digital measured data and are stored in a memory for on-line or off-line evaluation, the analog measured data in the parallel measured data channels being synchronously sampled by a digital signal order or event order, **characterized** in that the measured data channels are distinguished or divided into analog data channels and into digital or so-called event channels, in that the synchronous sampling, i.e. pick-up, processing and storage of the measured data recorded in the analog measured data channels is controlled by means of the signal (4, 4′) derived from the events and processed in the event channels, in that the phase time (tₙₘ) between two subsequent sampling signals is measured, and in that each time an identification code of the event signal triggering the sampling operation, or rather the respective event channel, the phase time (tₙₘ) between this sampling signal and the preceding one, and the appertaining sampling values or sampled measured data (A(nm)) are stored.

2. A process as claimed in claim 1, **characterized** in that the sampling signal (4, 4′) is formed by OR-linking of event signals and/or event signals scaled down.

3. A system for implementing the gathering and evaluation of measured data as claimed in claim 1 or in claim 2, with measured data channels which are operated in parallel and which are independent of one another, namely with analog data channels, which are provided with individual analog-to-digital converters or with multiplexers having one common analog-to-digital converter at a time and with memories, with digital measured data channels, or rather with so-called event channels, as well as with circuits for controlling the sampling operation and the gathering of the measured data, **characterized** in that the pick-up, the processing or further handling and the storage of the measured values present in the individual analog data channels is synchronously controllable by means of a sampling signal (4, 4′) derived from the event signals, in that the sampling signal further can be fed to a channel decoder (8, 8′) identifying the event channel of the event triggering the sampling signal as well as to a phase time measuring unit (9, 9′) detecting the time duration (tₙₘ) between two subsequent sampling signals (4, 4′), and in that each time a sampling signal (4, 4′) comes up the identification code such as the number of the triggering event channel and the phase time (tₙₘ) between this sampling signal and the preceding one as well as the appertaining sampled values can be stored.

4. A system as claimed in claim 3, **characterized** in that an event channel is provided to which a time base (14, 15) is connected.

5. A system as claimed in claim 3 or claim 4, **characterized** in that the event channels have individual signal processing stages (5, 25, 26) followed by event rate scaling-down units (6, 27, 28).

6. A system as claimed in any one or several of claims 3 to 5, **characterized** in that the sampling signal is formed by OR-linking (OR-stage 7, 7′) of all event signals which have been processed or, if applicable, scaled down.

7. A system as claimed in any one or severals of claims 3 to 6, **characterized** in that the phase time measuring unit (9, 9′) contains a central counter which is reset and restarted by every event signal which has been processed and, if applicable, scaled down, each time the counter contents being transferable as phase time into the memory (11, 11′).

8. A system as claimed in any one or several of claims 3 to 7, **characterized** in that the system is equipped with input stages (16, 17) of the same kind which comprise an input amplifier or preamplifier (21, 22) and a change-over device (19, 20) each and whose input signals can be evaluated as analog data and/or as event signals, depending on the operating position of the change-over device (19, 20).

9. A system as claimed in claim 8, **characterized** in that additional signals (inputs R1, R2) indicating the direction or the sign of a change, and marking signals (inputs M₁, M₂), e.g. for zero marking, can be fed to and evaluated in the input stages (16, 17).

## Revendications

1. Procédé de saisie et d'évaluation de données de mesure, à canaux multiples, selon lequel des données de mesure analogiques sont relevées, converties en données de mesure numériques, et conservées dans une mémoire pour l'évaluation en ligne ou en différé, les données de mesure analogiques étant balayées de manière synchrone, dans les canaux parallèles de données de mesure, par une suite numérique de signaux ou d'événements, caractérisé en ce que les canaux de données de mesure sont distingués ou séparés en canaux de données analogiques et en canaux numériques ou en canaux dits canaux d'événements, en ce que le balayage synchrone, c'est-à-dire le relevé, le traitement et la conservation des données de mesure saisies dans les canaux de données de mesure analogiques, est commandé par le signal (4, 4′) dérivé des événements et traité dans les canaux d'événement, en ce que la durée de phase (tₙₘ) entre deux signaux de balayage successifs est mesurée, et en ce que l'on mémorise à chaque fois, une identification du signal d'événement déclenchant le balayage, c'est-à-dire du canal d'événement correspondant, la durée de phase (tₙₘ) entre ce signal de balayage et le précédent, et les valeurs de balayage ou les données de mesure balayées (A(nm)) associées.

2. Procédé selon la revendication 1, caractérisé en ce que le signal de balayage (4, 4′) est formé par une combinaison logique "OU" de signaux d'événement et/ou de signaux d'événement divisés.

3. Système pour la mise en oeuvre de la saisie et de l'évaluation de données de mesure, selon la revendication 1 ou 2, comprenant des canaux de données de mesure indépendants les uns des autres et fonctionnant en parallèle, à savoir des canaux de données analogiques, qui disposent de convertisseurs analogiques-numériques, ou de multiplexeurs comprenant chacun un convertisseur analogique-numérique commun, et de mémoires, le système comprenant également des canaux de données de mesure numériques ou canaux dits canaux d'événements, ainsi que des circuits de commande du balayage et de la saisie des valeurs de mesure, caractérisé en ce que le relevé, le traitement ou la poursuite du traitement et la mémorisation des valeurs de mesure présentes dans les canaux de données analogiques individuels, peuvent être commandés de manière synchrone à l'aide d'un signal de balayage (4, 4′) dérivé des signaux d'événements, en ce que le signal de balayage peut être transmis à un décodeur de canaux (8, 8′) qui identifie le canal d'événement de l'événement déclenchant le signal de balayage, ainsi qu'à un dispositif de mesure de la durée de phase (9, 9′) qui détermine la durée (tₙₘ) entre deux signaux de balayage (4, 4′) successifs, et en ce que lors de chaque apparition d'un signal de balayage (4, 4′), l'identification, par exemple le numéro, du canal d'événement provoquant le déclenchement, et la durée de phase (tₙₘ) entre ce signal de balayage et le précédent, ainsi que les valeurs de balayage correspondantes, peuvent être mémorisés.

4. Système selon la revendication 3, caractérisé en ce qu'il existe un canal d'événement auquel est raccordée une base de temps (14, 15).

5. Système selon la revendication 3 ou 4, caractérisé en ce que les canaux d'événement présentent des étages individuels de mise en forme du signal (5, 25, 26), auxquels succèdent des diviseurs de fréquence d'événement (6, 27, 28).

6. Système selon l'une ou plusieurs des revendications 3 - 5, caractérisé en ce que le signal de balayage est élaboré par une combinaison logique "OU" (étage "OU" 7, 7′) de tous les signaux d'événements mis en forme ou, le cas échéant, divisés.

7. Système selon l'une ou plusieurs des revendications 3 - 6, caractérisé en ce que le dispositif de mesure de la durée de phase (9, 9′) comprend un compteur central, qui est remis à zéro et à nouveau remis en marche par chaque signal d'événement mis en forme et le cas échéant divisé, l'état du compteur pouvant à chaque fois être transmis à la mémoire (11, 11′) en tant que durée de phase.

8. Système selon l'une ou plusieurs des revendications 3 - 7, caractérisé en ce que celui-ci est équipé d'étages d'entrée (16, 17) de même type, qui comportent chacun un amplificateur d'entrée ou préamplificateur (21, 22) et un dispositif de commutation (19, 20), et dont les signaux d'entrée, en fonction de la position de commutation du dispositif de commutation (19, 20), peuvent être exploités en tant que données analogiques et/ou en tant que signaux d'événement.

9. Système selon la revendication 8, caractérisé en ce qu'il est possible d'amener aux étages d'entrée (16, 17), et d'y exploiter, des signaux supplémentaires (entrées R1, R2), qui indiquent le sens ou le signe d'une variation, et des signaux de marquage (entrées M1, M2), par exemple pour le marquage à zéro.
